Europäisches Patentamt

European Patent Office

Office européen des brevets

(11) Veröffentlichungsnummer: **0 143 363**
**B1**

(12) # EUROPÄISCHE PATENTSCHRIFT

(45) Veröffentlichungstag der Patentschrift:
**06.09.89**

(51) Int. Cl.⁴: **C 01 F 11/18, C 04 B 14/28**

(21) Anmeldenummer: **84113279.8**

(22) Anmeldetag: **05.11.84**

(54) **Calcitischer Füllstoff und Verfahren zu seiner Herstellung.**

(30) Priorität: **04.11.83 DE 3339996**

(43) Veröffentlichungstag der Anmeldung:
**05.06.85 Patentblatt 85/23**

(45) Bekanntmachung des Hinweises auf die Patenterteilung:
**06.09.89 Patentblatt 89/36**

(84) Benannte Vertragsstaaten:
**BE CH DE FR GB IT LI NL**

(56) Entgegenhaltungen:
**DE-A- 2 716 794**
**DE-A- 2 913 613**

(73) Patentinhaber: **WACKER-CHEMIE GMBH,**
**Prinzregentenstrasse 22, D-8000 München 22 (DE)**

(72) Erfinder: **Eck, Herbert, Dr. Dipl.-Chem., Burg 11,**
**D-8263 Burghausen (DE)**
Erfinder: **Jira, Reinhard, Dr. Dipl.-Chem.,**
**Haydnstrasse 13/I, D-8263 Burghausen (DE)**
Erfinder: **Hopf, Heinrich, Mehringer Strasse 49a,**
**D-8263 Burghausen (DE)**

## Beschreibung

Füllstoffe, die in Kunststoffen und insbesondere in Kautschuken verstärkend wirken, gewinnen immer mehr an Bedeutung. Die besten Ergebnisse erreicht man hierbei ganz allgemein mit Füllstoffen, die spezielle (BET-)Oberflächen (nach Brunnauer, Emmet, Teller cf. Kirk-Othmar, 2nd Edit., Vol. 1, Seite 431) von $>20$ $m^2$/g besitzen.

Es ist auch bekannt, daß faserförmige Füllstoffe sich als Verstärkerfüllstoffe besser eignen als plättchenförmige und diese wiederum besser als z.B. solche mit runder oder mit kubischer Teilchenform. Bei den faserförmigen ist das Verhältnis von Länge:Durchmesser (Formfaktor) von hervorragender Bedeutung. D.h., es muß eine produktspezifische, kritische Größe überschreiten, damit der Vorteil der faserförmigen Struktur zum Tragen kommt. Im allgemeinen liegt dieser Wert um oder über 10.

Andererseits wird vielfach Kreide oder, allgemeiner ausgedrückt, Calciumcarbonat wegen ihrer guten Verfügbarkeit anderen Füllstoffen vorgezogen. Natürlich vorkommende Calcite oder Aragonite sind jedoch, auch fein aufgemahlen wegen ihrer geringen Oberfläche vielfach unbefriedigend. Daher wird schon seit langem Calciumcarbonat auch synthetisch aus Calciumhydroxid und Kohlendioxid in wäßriger Suspension hergestellt. Es wurden viele Verfahren zur Herstellung des Calciumcarbonats in verschiedenen Kristallformen und -strukturen beschrieben.

Calciumcarbonat mit aragonitischer Kristallstruktur eignet sich im allgemeinen als Verstärkerfüllstoff weniger gut als eines mit calcitischer Kristallstruktur und viele bekannte stäbchenförmige Calciumcarbonate sind aragonitisch. Es gibt jedoch auch calcitische, stäbchenförmige Produkte. Ihre durchschnittlichen Formfaktoren liegen aber unter 5. Zudem sind die Teilchen relativ groß, d.h. sie haben eine spezifische Oberfläche von $<15$ $m^2$/g.

In der DE-OS 2 716 794 wird nun ein demgegenüber bereits verbessertes Verfahren beschrieben, bei dem Calciumcarbonat-Korpuskularketten hergestellt werden, d.h. Calciumcarbonat-Kristallite sind bei dem dortigen Produkt kettenförmig aneinandergelagert. Naturgemäß ist diese Lösung noch nicht völlig befriedigend.

Die DE-OS 2 913 613 beschreibt ein Verfahren, bei dem $CaCO_3$ in Gegenwart von $P_2O_5$ durch Einleiten von $CO_2$ aus einer wäßrigen $Ca(OH)_2$-Suspension in drei Stufen ausgefällt wird. In der ersten Stufe wird $CaCO_3$ in Form von Faserbündeln ausgefällt. In der zweiten Stufe wird das Produktgemisch der 1. Stufe unter Erhöhung der Tröpfchengröße im Gegenstrom zu $CO_2$ versprüht; dabei agglomerieren die Faserbündel zu einem kompakten Kern. In der 3. Stufe wird unter erneuter Vergrößerung der Tröpfchen das Produktgemisch der 2. Stufe versprüht. Dabei lagern sich die noch nicht in Stufe 2 agglomerierten Faserbündel sowie neugebildete Faserbündel auf den Kernagglomeraten ab. Feinteilige nadel- bzw. faserförmige Calcit-Monolithe mit großer spezifischer Oberfläche sind nach dieser Verfahrensweise nicht erhältlich.

Aufgabe der Erfindung war es nun, ein demgegenüber verbessertes feinteiliges, calcitisches Calciumcarbonat herzustellen, dessen spezifische Oberfläche über 15, vorzugsweise $>20$ $m^2$/g liegt und dessen durchschnittlicher Formfaktor über 5, besser über 8 und vorzugsweise über 10 liegt, dessen Kristallhabitus stäbchen- oder faserförmig ist und das als verstärkender Füllstoff für Kunststoffe verwendet werden kann.

Diese Aufgabe wird gelöst durch einen calcitischen Calciumcarbonatfüllstoff in Nadel-, Faserund/oder Stäbchenform mit einer spezifischen BET-Oberfläche von 15–200 $m^2$/g, einen durchschnittlichen Formfaktor von $>5$ und mit einem Phosphatgehalt von 2,5–25 Gew.%, berechnet als $PO_4^{3-}$ und bezogen auf Calciumcarbonat, hergestellt durch Fällung einer wäßrigen 3–25 Gew.%-igen Calciumhydroxid-Suspension mit Kohlendioxid, ggf. gemischt mit Luft oder Stickstoff, bei Temperaturen von 0–25°C, wobei vor Beginn des pH-Abfalls 3–25 Gew.%, bezogen auf das eingesetzte Calciumhydroxid, $PO_4^{3-}$ in Form von $H_aMe_{3-a}PO_4$ (a = 0–3; Me = H, $NH_4^+$ (a $\neq$ 0), $Na^+$, $K^+$) zugegeben, während der gesamten Reaktion eine einwandfreie Durchmischung gewährleistet und das fertige Produkt gegebenenfalls in bekannter Weise getrocknet und/oder gecoatet wird.

Das Calciumcarbonat obiger Eigenschaften wird vorzugsweise in der Weise hergestellt, daß die Fällung aus einer wäßrigen 3–35 gew.%-igen, vorzugsweise bis 25 gew.-%igen Calciumhydroxid-Suspension mit Kohlendioxid, ggf. gemischt mit Luft oder Stickstoff, in an sich bekannter Weise im wesentlichen bei 0 bis 25°C, vorzugsweise 5–20°C erfolgt. Das Verfahren ist dadurch gekennzeichnet, daß vor Beginn des pH-Abfalls, vorzugsweise zu einem Zeitpunkt, zu dem noch eine gesättigte Calciumhydroxidlösung vorliegt, insbesondere vor 65%igem theoretischem Umsatz (bezogen auf Neutralisationsmittel) vorzugsweise 3–25 Gew.%, besonders vorzugsweise 5–12 Gew.%, bezogen auf das eingesetzte Calciumhydroxid, $PO_4^{3-}$ in Form von $H_aMe_{3-a}PO_4$ (a = 0–3; Me = H, $NH_4^+$ (a $\neq$ 0), $Na^+$, $K^+$) zugegeben und das fertige Produkt gegebenenfalls in bekannter Weise getrocknet wird. Bei der Herstellung ist auch darauf zu achten, daß während der genannten Umsetzung eine einwandfreie Durchmischung des Reaktionsgemisches gewährleistet ist. Das Produkt kann durch Zugabe eines geeigneten später definierten Coatungsmittels während der Reaktion, vorzugsweise nach der Zugabe von 50 mol-% des erforderlichen Kohlendioxids, jedoch besonders vorzugsweise bei einem pH $\geq$ 11 behandelt werden. Auch das getrocknete Produkt läßt sich in bekannter Weise noch mit z.B. Hydrophobierungsmitteln, wie Stearinsäure, Carbonsäuregruppen enthaltendem Polybutadien u.a. für Calciumcarbonat geeigneten Produkten für den jeweiligen Einsatzzweck modifizieren. Die Carbonatisierung wird vorzugsweise bis zur völligen Neutralisation des Calciumhydroxids, falls erforderlich, bis 7 oder gar 6, insbesondere bis pH ≈ 9,3, durchgeführt.

Bei herkömmlichen Verfahren fällt bei der Fällung von Calciumhydroxid aus wäßriger Suspension mittels Kohlendioxid zwar manchmal sogar Calciumcarbonat in Form von Nadeln mit einem Durchmesser von < 0,01–0,03 µm und einer Länge von ca. 0,2 µm an (Stadium I), jedoch läßt sich im Lauf der 2. Hälfte der Umsetzung, insbesondere nach Auflösung des Calciumhydroxids, im Elektronenmikroskop stets ein Zerfall dieser Nadeln in der Weise beobachten, daß zunächst Pseudoeinkerbungen quer zur Nadel auftreten (Stadium II), dann Kriställchen als Korpuskularketten zusammenhängen (Stadium III), die schließlich in einzelne rhomboederische Kriställchen (Stadium IV) zerfallen. Der mittlere Durchmesser dieser Kriställchen liegt üblicherweise oberhalb 0,02 µm, meist oberhalb 0,03 µm. Lediglich bei dem Verfahren der DE-OS 2 716 794 fallen manchmal Korpuskularketten an, d.h. Stadium III wird dort stabilisiert.

Die Veränderung der zunächst entstehenden Nädelchen, die bei den herkömmlichen Verfahren nicht von den Calciumhydroxidteilchen isoliert werden konnten oder gar der Zerfall konnte gemäß der Erfindung überraschenderweise mit Hilfe von Phosphationen und genauer Beachtung der weiteren Parameter weitestgehend verhindert werden, d.h. es gelang überraschenderweise bereits Stadium I, zumindest aber ein Übergangsstadium zu Stadium II zu stabilisieren.

Führt man die Reaktion bei niedrigerer Temperatur als 0 °C durch, so bringt das nicht nur wirtschaftliche, sondern sogar ebenso wie eine zu hohe Temperatur, auch qualitative Nachteile in Form einer beträchtlichen Vergröberung und Reduzierung der spezifischen Oberfläche. Aus diesem Grunde wird im wesentlichen bei 0–30 °C, vorzugsweise bei 0–25 °C, besonders vorzugsweise bei 5–20 °C gearbeitet. Die exakte Beachtung der Temperaturgrenzen wirkt sich jedoch im zweiten Teil der Reaktion, d.h. nach Auflösen des gesamten Hydroxids nicht mehr so entscheidend, verglichen mit dem 1. Teil, aus. Zu hohe Temperaturen ergeben überdies aragonitische grobe Teilchen.

Verwendet man eine wäßrige Calciumhydroxid-Suspension mit weniger als 3 Gew.-%igem Calciumhydroxidgehalt, so ergibt das keine Qualitätssteigerung, wohl aber wirtschaftliche Nachteile. Die obere Grenze ergibt sich aus der Viskositätssteigerung im Reaktionsgemisch, die insbesondere zwischen 50 und 65% Umsatz ein Maximum erreicht.

Der Zusatz von $PO_4^{3-}$-Ionen erfolgt vor Beginn des pH-Abfalls, vorzugsweise zu einem Zeitpunkt, zu dem noch eine gesättigte Calciumhydroxidlösung vorliegt, insbesondere vor 65%igem, besonders vorzugsweise vor 30%igem Umsatz (bezogen auf die theoretisch benötigte Menge an Kohlensäure). Dabei verwendet man vorzugsweise $H_3PO_4$, $NH_4H_2PO_4$, $(NH_4)_2HPO_4$ oder die entsprechenden Natrium- oder weniger bevorzugt die Kaliumphosphate. Bei dieser Maßnahme sollte man eher eine Störung der Kristallstruktur und damit eine Destabilisierung der Stäbchenstruktur erwarten. Überraschenderweise trat das Gegenteil ein, sofern man die genannten Mengen beachtet.

Verwendet man zuviel Phosphat, so kann dies zur Bildung von groben Stäbchen und zum Zerfall der feinen Primärstäbchen führen, d.h. die Reaktion schreitet über Stadium II hinaus fort. Auch der Ersatz von Orthophosphat bzw. Orthophosphorsäure durch z.B. Meta- oder Oligoformen führt nicht zum gewünschten Ergebnis.

Die Beschichtung des erfindungsgemäß hergestellten Calciumcarbonats kann in wäßriger Suspension (vor dem Trocknungsprozeß) oder nach dem Trocknungsprozeß erfolgen. Im ersteren Falle gibt man das Coatungsmittel bevorzugt nach der Zugabe von 50 mol-% des zur vollständigen Carbonatisierung erforderlichen Kohlendioxids, besonders vorzugsweise bei einem pH ≥ 11 zu. Selbstverständlich kann die Zumischung auch nach erfolgter Carbonatisierung erfolgen, jedoch bringt dies gelegentlich qualitative Nachteile.

Eine zu frühe Zugabe kann dagegen sogar die Ausbildung der Kristalle stören.

Als Coatungsmittel eignen sich grundsätzlich alle, die für Calciumcarbonat geeignet sind. Als Beispiele seien genannt: Carboxylgruppen enthaltende Polymere, z.B. Butadien-Maleinsäure- oder -(Meth)acrylsäurecopolymere, Styrol-Maleinsäure- oder -(Meth)acrylsäurecopolymere, Poly(meth)acrylsäure und deren Copolymere mit Acrylsäureestern und -amiden, Carbonsäuren, wie (Meth)acrylsäure, Laurinsäure, Ölsäure, Stearinsäure usw. Diese können sowohl als freie Säuren, als auch in Form ihrer Salze, z.B. als $NH_4^+$- oder $Na^+$-Salze zugegeben werden. Üblicherweise genügt ein Zusatz von 0,5–5 Gew.-% Coatungsmittel, bezogen auf Calciumcarbonat. Dieser Wert wird vorzugsweise auch nicht überschritten.

Die Trocknung des Calciumcarbonats erfolgt gegebenenfalls in bekannter Weise, z.B. durch Sprühtrocknen oder durch Filtration (oder Zentrifugieren) und Trocknung des Filterkuchens.

Der Füllstoff zeichnet sich aus durch eine feine nadelige, faserige und/oder stäbchenförmige Form, besitzt eine BET-Oberfläche von 15–200, vorzugsweise 20–150, insbesondere 25–80 m²/g und einen mittleren Formfaktor von über 5, vorzugsweise über 8, insbesondere von 8–50, und weist einen Phosphatgehalt von 2,5–25, vorzugsweise 4–12 Gew.% auf, berechnet als $PO_4^{3-}$ und bezogen auf Calciumcarbonat. Der Durchmesser der Teilchen liegt vorzugsweise bei 0,003 bis 0,03 µm, die Länge vorzugsweise bei 0,07 bis 0,3 µm.

Das erfindungsgemäß hergestellte Calciumcarbonat eignet sich zur Verwendung als Füllstoff, insbesondere als Verstärkerfüllstoff in verschiedenen Werkstoffen, z.B. in Kautschuken.

Die nachfolgenden Beispiele dienen der weiteren Erläuterung der Erfindung.

Allgemeine Versuchsvorschrift

In einem mit Rührer, Thermometer, Gaseinleitungsrohr und pH-Meter ausgestatteten, kühlbaren Reaktor wird die wäßrige Calciumhydroxid-Suspension vorgelegt (soweit nicht anders angegeben, Vergleichsversuche B, D und N) und mit $CO_2$ (150 l/h), bzw. einem $CO_2$-Luftgemisch behandelt. Die angewandten Temperaturen, die Zugabezeit und -menge der $PO_4^{3-}$-Ionen sind in der nachstehenden Tabelle angegeben. Das gleiche gilt für andere zugegebene Verbindungen und die Umfangsgeschwindigkeit des Rührers, sofern sie nicht 14 m/min. betrug.

* Elektronenmikroskopische Aufnahme liegt bei.

| Vergleichs-versuchs-Nr. | Zusätze Menge (Gew.-%, bezogen auf $CA(OH)_2$) | Art der Zugabe | Temperatur °C Beginn | Ende |
|---|---|---|---|---|
| A | – | – | 11 | 16 |
| B | 3% $Ba(OH)_2$ | 1,4 kg $H_2O$ + $Ba(OH)_2$ vorgelegt $CO_2$ durchgeleitet bis pH 10, dann $Ca(OH)_2$ zugegeben und weiter $CO_2$ durchgeleitet | 11 | 16 |
| C | 3% $Ba(OH)_2$ bei 47 g $CO_2$ zugegeben | gelöst in $H_2O$ | 11 | 16 |
| D | 3% $Ba(OH)_2$ | 1,4 kg $H_2O$ + $Ba(OH)_2$ vorgelegt $CO_2$ durchgeleitet bis pH 10 dann $Ca(OH)_2$ zugegeben und weiter $CO_2$ durchgeleitet | 11 | 16 |
| E | 3 g $Al_2(SO_4)_3$ | in Vorlage | 11 | 16 |
| F | 0,5% Zitronensäure | in Vorlage | 11 | 16 |
| G | 10% Benzoesäure | bei 30 g $CO_2$ | 11 | 16 |
| H | 13,9 g Toluolsulfonsäure | bei 30 g $CO_2$ | 11 | 16 |
| I | 8 g $H_2SO_4$ | bei 30 g $CO_2$ | 11 | 16 |
| K | 5,9 g Acrylsäure | bei 30 g $CO_2$ | 11 | 16 |
| L | 1% $H_3PO_4$ | bei 25 g $CO_2$ | 11 | 16 |
| M | 3% ZnO bei 48 g $CO_2$ zugegeben | | 11 | 16 |
| N | 3% ZnO | 1,4 kg $H_2O$ + 3 g ZnO, pH 8,48; 0,8 g $CO_2$ eingeleitet bis pH 7; dann $Ca(OH)_2$ zugegeben und weiterhin mindestens 58 g $CO_2$ | 11 | 16 |
| O | entsprechend DE-OS 2 716 794, Beispiel 5 | | | |
| P | entsprechend DE-OS 2 716 794, Beispiel 29 | | | |
| Q | entsprechend DE-OS 2 716 794, Beispiel 30 | | | |
| R | entsprechend DE-OS 2 716 794, Beispiel 4 | | | |

| Ver-gleichs-versuchs-Nr. | $CO_2$ in g | pH v. Reak. | n. Reak. | elektronenmikroskopische Aufnahmen Teilchenform ∅ (µm) | Teilchenform ∅ (µm) |
|---|---|---|---|---|---|
| A | 58,6 | 13 | 9 | Rhomboeder, 0,03–0,07 | |
| B | 60 | 13 | 9 | Rhomboeder, 0,05 | |
| C | 60 | 13 | 9 | Rhomboeder, 0,02–0,06 | |
| D | 52 | 13 | 12,4 | Rhomboeder, 0,02 | |
| E | 57,4 | 13,7 | 9 | Rhomboeder,* 0,03–0,07 | |
| F | 60 | 13 | 9 | Rhomboeder, 0,02–0,05 | |
| G | 57,4 | 13 | 9 | Rhomboeder, 0,05–0,07 | |
| H | 56 | 13 | 8,5 | Rhomboeder, 0,04–0,06 | |
| I | 55,7 | 13 | 9,1 | Rhomboeder, 0,02–0,03 | |

(Fortsetzung)

| Ver-gleichs-versuchs-Nr. | $CO_2$ in g | pH | | elektronenmikroskopische Aufnahmen | |
|---|---|---|---|---|---|
| | | v. Reak. | n. Reak. | Teilchenform $\varnothing$ (µm) | Teilchenform $\varnothing$ (µm) |
| K | 55,7 | 13 | 9,1 | Rhomboeder, 0,03–0,07 | |
| L | 58 | 13,2 | 9,5 | Rhomboeder, 0,01–0,03 | wenige Rhomboeder 0,08–0,1 |
| M | 58,4 | 13 | 9,5 | Rhomboeder, 0,03–0,08 | |
| N | 58,7 | 13 | 9,2 | Rhomboeder, 0,03–0,06 | |
| O | entsprechend DE-OS 2 716 794, Beispiel 5* | | | | |
| P | entsprechend DE-OS 2 716 794, Beispiel 29* | | | | |
| Q | entsprechend DE-OS 2 716 794, Beispiel 30* | | | | |
| R | entsprechend DE-OS 2 716 794, Beispiel 4* | | | | |

| Vers. Nr. | Zugabe Menge Gew.% bezogen auf $Ca(OH)_2$ | Art d. Zugabe | Temp. °C Beginn | Ende | $CO_2$ in g |
|---|---|---|---|---|---|
| 1 | 3% $H_3PO_4$ | bei 25 g $CO_2$ | 11 | 15 | 56,3 |
| 2 | 5% $H_3PO_4$ | bei 25 g $CO_2$ | 11 | 16 | 55,1 |
| 3 | 8% $H_3PO_4$ | bei 25 g $CO_2$ | 11 | 16 | 52,4 |
| 4 | 12% $H_3PO_4$ | bei 25 g $CO_2$ | 11 | 16 | 50,4 |
| 5 | 8% $H_3PO_4$ | Vorlage | 11 | 16 | 52,4 |
| 6 | 8% $H_3PO_4$ | bei 25 g $CO_2$ | 11 | 17 | 54,2 |
| 7 | 8% $H_3PO_4$ | bei 30,8 g $CO_2$ | 11 | 16 | 53,1 |
| 8 | 8% $H_3PO_4$ | bei 35 g $CO_2$ | 11 | 16 | 55,0 |
| 9 | 8% $H_3PO_4$ | bei 45 g $CO_2$ | 11 | 16 | 53,5 |
| 10 | 8% $H_3PO_4$ | bei 25 g $CO_2$ | 11 | 12 | 60,0 |
| 11 | 8% $H_3PO_4$ | bei 25 g $CO_2$ | 11 | 13 | 60,0 |
| 12 | 8% $H_3PO_4$ | bei 25 g $CO_2$ | 11 | 16 | 56,4 |
| 13 | 8% $H_3PO_4$ | bei 11 g $CO_2$ | 11 | 16 | 23,0 |
| 14 | 8% $H_3PO_4$ | bei 25 g $CO_2$ | 11 | 16 | 53,4 |
| 15 | 8% $H_3PO_4$ | bei 53,5 g $CO_2$ | 11 | 19 | 60,0 |
| 16 | 15% $H_3PO_4$ | bei 45 g $CO_2$ $H_3PO_4$ zugegeben | 11 | 16 | 48,3 |
| 17 | 8% $Na_{1,5}$–$H_{1,5}PO_4$ | bei 27 g $CO_2$ | 18 | 19 | 58,6 |
| 18 | 8% $Na_2HPO_4$ | bei 29 g $CO_2$ | 18 | 19 | 59,0 |

| Vers. Nr. | pH v. Reak. | n. Reak. | Bemerkungen | elektromikroskopische Aufnahmen Teilchenform $\varnothing$ (µm) l = Länge (µm) | Teilchenform $\varnothing$ (µm) in untergeordneter Menge |
|---|---|---|---|---|---|
| 1 | 13,2 | 9,5 | | Stäbchen: $\varnothing$:0,01; l: 0,05–0,15 | Rhomboeder 0,01 und 0,05–0,2 |
| 2 | 13,2 | 9,5 | | Stäbchen: $\varnothing$:0,01–0,02; l: 0,05 > 0,2 | einige größere stäbchen-förmige Agglomerate |
| * 3 . | 13,2 | 9,5 | | Stäbchen: $\varnothing$:0,01–0,02; l: 0,1–0,4 | |
| 4 | 13,2 | 9,5 | | Stäbchen: $\varnothing$:0,01–0,02; l: 0,15 | Rhomboeder 0,01–0,04 |

(Fortsetzung)

| Vers. Nr. | pH v. Reak. | n. Reak. | Bemerkungen | elektromikroskopische Aufnahmen Teilchenform $\varnothing$ (μm) l = Länge (μm) | Teilchenform $\varnothing$ (μm) in untergeordneter Menge |
|---|---|---|---|---|---|
| 5 | 13,5 | 9,5 | | Fasern: $\varnothing$:0,01–0,02; l: $\geqslant$0,2 | |
| * 6 | 13,5 | 9,5 | spez. Oberfl. 38 m²/g | Fasern: $\varnothing$:0,01 (0,02); l: 0,05–0,5 | |
| * 7 | 13,5 | 9,5 | | Fasern:: $\varnothing$:0,01(–0,02); l: $\geqslant$0,2 | |
| * 8 | 13,4 | 9,5 | spez. Oberfl. 45 m²/g | Fasern: $\varnothing$:0,01(–0,02); l: $\geqslant$0,2 | |
| 9 | 13,4 | 9,5 | | Stäbchen:$\varnothing$:0,01–0,02; l: 0,1–0,4 «Zerfallsstadium II» siehe Seite 3 | |
| 10 | 13,3 | 13,4 | Umfangsgeschw. 52 m/min. bei 60 g CO₂ abge-brochen, kein pH Abfall in d. Mitte d. Reaktion | | |
| 11 | 13,3 | | Umfangsgeschw. 69 m/min. bei 60 g CO₂ abge-brochen, ein pH Abfall in d. Mitte d. Reaktion | | |
| 12 | 13,3 | 9,5 | Umfangsgeschw. 104 m/min. | wie Vers. Nr. 6 | |
| 13 | 13,3 | 9,5 | 3%ige (Ca(OH)₂-Dispersion | wie Vers. Nr. 6 | |
| 14 | 13,3 | 9,5 | 7%ige Ca(OH)₂-Dispersion | wie Vers. Nr. 6 | |
| 15 | 13,4 | 9,5 | 15%ige Ca(OH)₂-Dispersion | wie Vers. Nr. 6 starke Agglomeration | |
| 16 | 13 | 9,5 | bei 48,3 g CO₂ abgebrochen | Nadeln: $\varnothing$:0,01–0,02; l: ca. 0,2 | s. wenige Rhomboeder 0,03 |
| * 17 | 13,3 | 9,6 | spez. Oberfl. 85 m²/g | Fasern: $\varnothing$:0,003–0,02; l: 0,2–1 | |
| * 18 | 13,4 | 8,0 | | Fasern: $\varnothing$:0,003–0,02; l: 0,1–1 | |

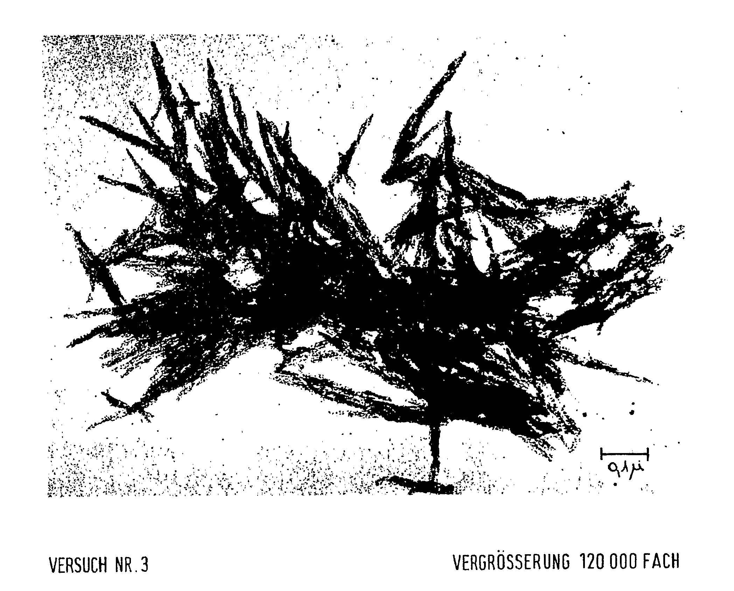

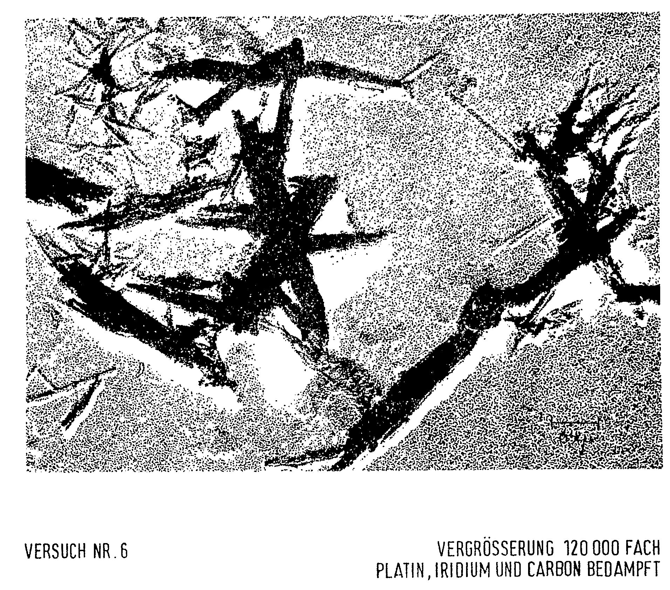

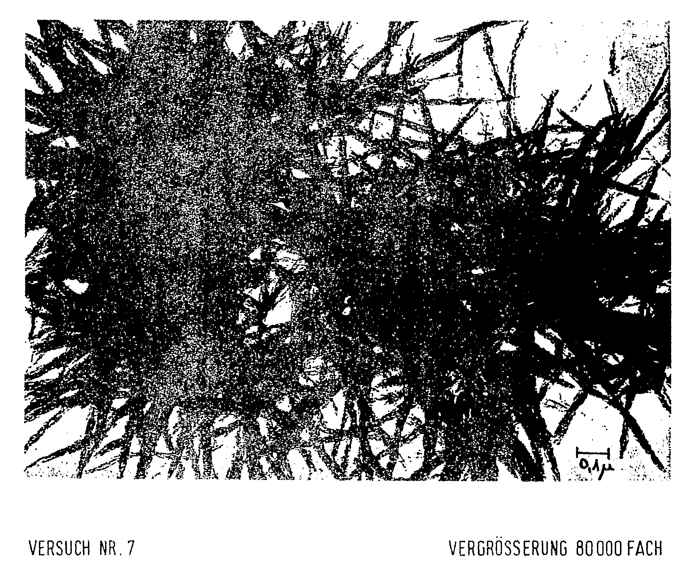

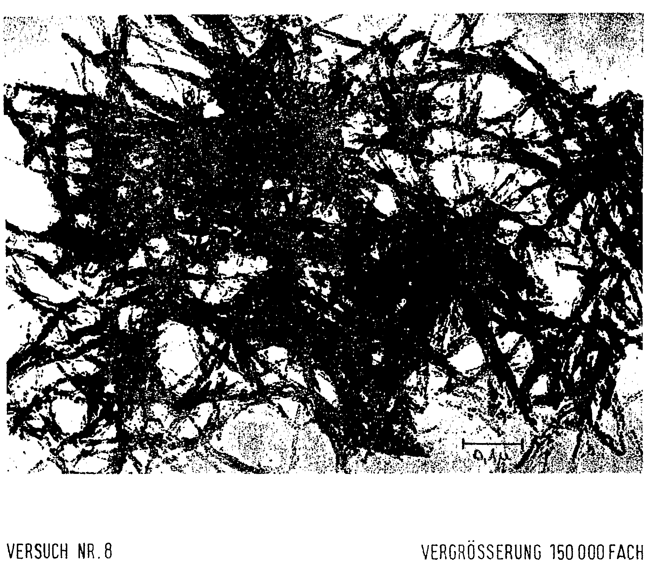

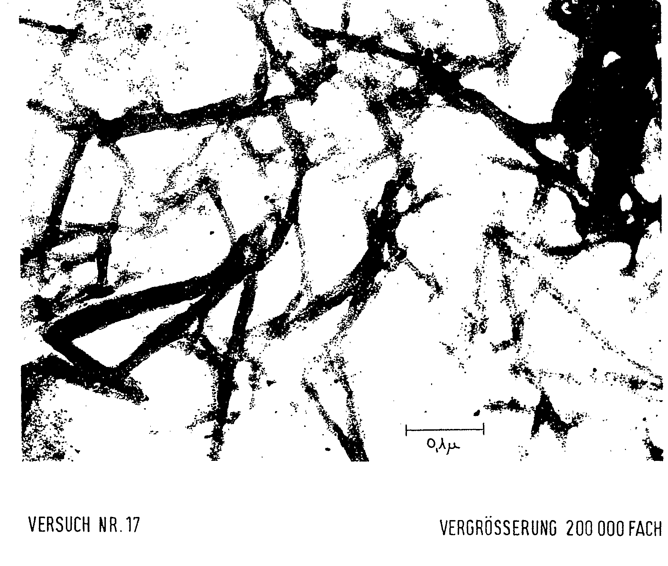

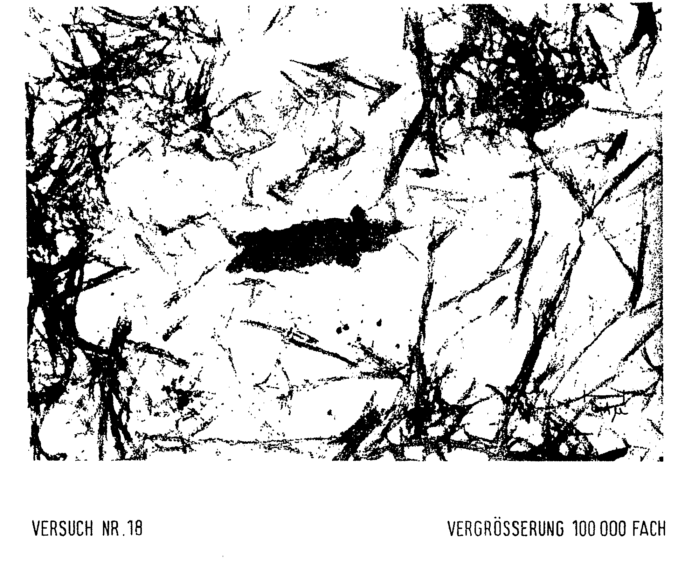

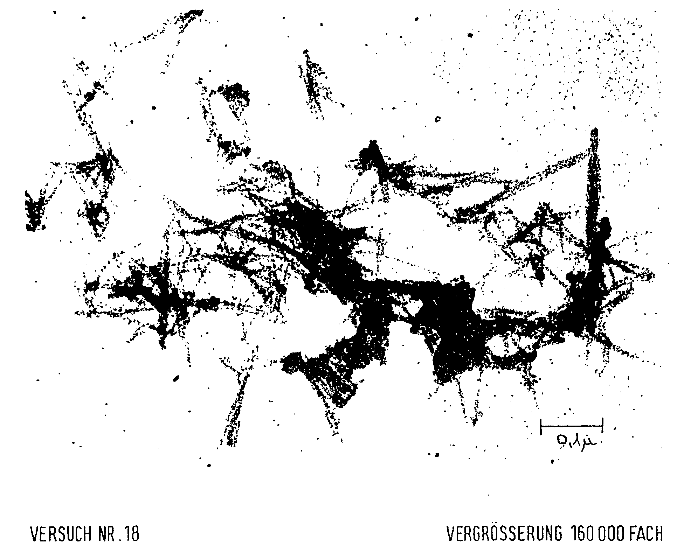

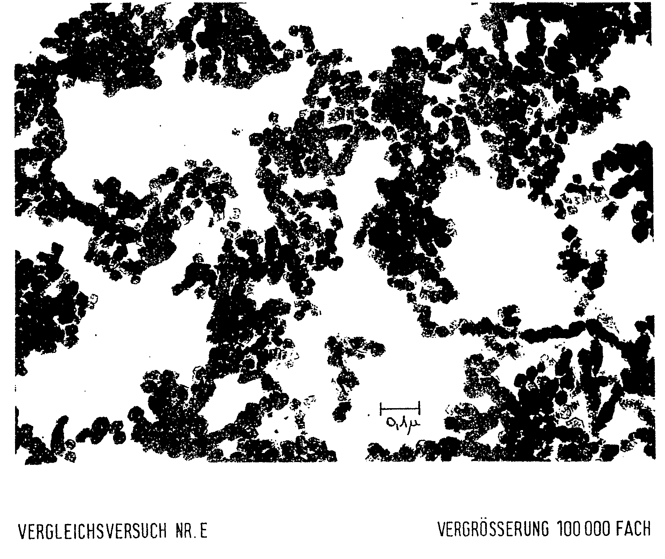

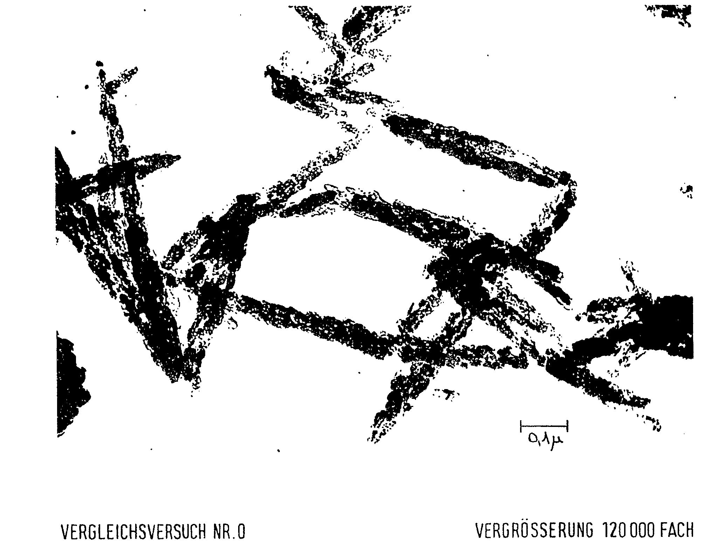

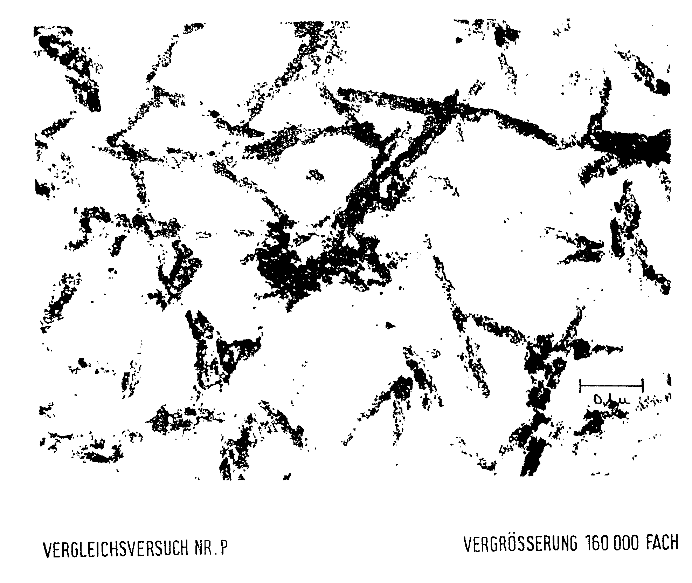

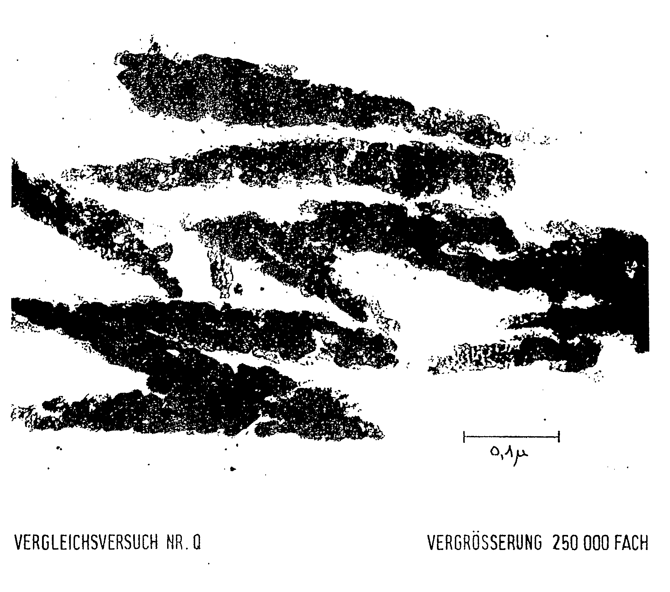

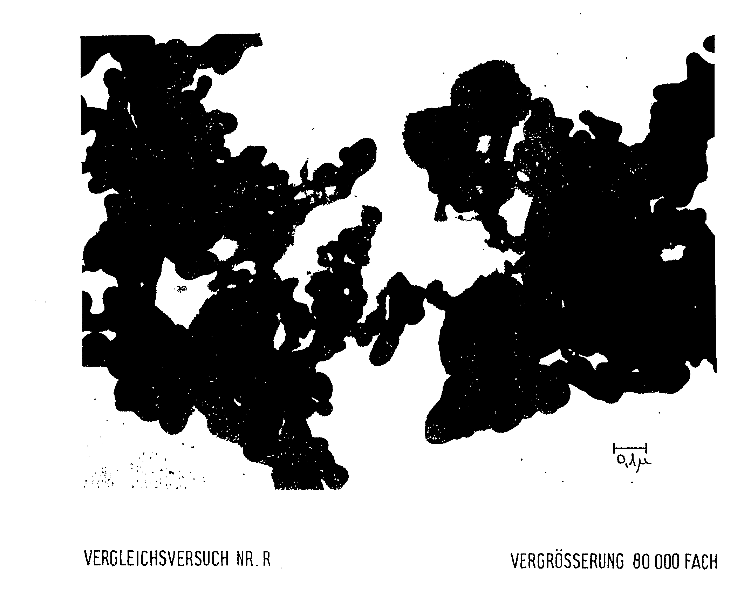

## Patentansprüche

1. Calcitischer Calciumcarbonatfüllstoff in Nadel-, Faser- und/oder Stäbchenform, mit einer spezifischen BET-Oberfläche von 15–200 m²/g, einem durchschnittlichen Formfaktor von $>5$ und mit einem Phosphatgehalt von 2,5–25 Gew.-%, berechnet als $PO_4^{3-}$ und bezogen auf Calciumcarbonat, hergestellt durch Fällung einer wäßrigen 3–25 Gew.-%igen Calciumhydroxid-Suspension mit Kohlendioxid, ggf. gemischt mit Luft oder Stickstoff, bei Temperaturen von 0–25°C, wobei vor Beginn des pH-Abfalls 3–25 Gew.-%, bezogen auf das eingesetzte Calciumhydroxid, $PO_4^{3-}$ in Form von $H_aMe_{3-a}PO_4$ (a = 0–3; Me = H, $NH_4^+$ (a $\neq$ 0), $Na^+$, $K^+$) zugegeben, während der gesamten Reaktion eine einwandfreie Durchmischung gewährleistet und das fertige Produkt gegebenenfalls in bekannter Weise getrocknet und/oder gecoatet wird.

2. Verfahren zur Herstellung von Calciumcarbonat entsprechend Anspruch 1 im wesentlichen bei Temperaturen von 0–25°C durch Fällung einer wäßrigen 3–25 Gew.-%igen Calciumhydroxid-Suspension mit Kohlendioxid ggf. gemischt mit Luft oder Stickstoff, dadurch gekennzeichnet, daß vor Beginn des pH-Abfalls 3–25 Gew.-%, bezogen auf das eingesetzte Calciumhydroxid, $PO_4^{3-}$ in Form von $H_aMe_{3-a}PO_4$ (a = 0–3; Me = H, $NH_4^+$ (a $\neq$ 0), $Na^+$, $K^+$) zugegeben, während der gesamten Reaktion eine einwandfreie Durchmischung gewährleistet und das fertige Produkt gegebenenfalls in bekannter Weise getrocknet und/oder gecoatet wird.

## Claims

1. Calcitic calcium carbonate filler in needle, fibre and/or rod form, having a specific BET surface area of 15–200 $m^2/g$, an average shape factor of $> 5$ and having a phosphate content of 2.5–25% by weight, calculated as $PO_4^{3-}$ and based on calcium carbonate, and prepared by precipitation of an aqueous 3–25% strength by weight calcium hydroxide suspension using carbon dioxide, if appropriate mixed with air or nitrogen, at temperatures of from 0–25°C, where 3–25% by weight, based on the calcium hydroxide employed, of $PO_4^{3-}$ being added in the form of $H_aMe_{3-a}PO_4$ (a = 0–3; Me = H, $NH_4^+$ (a $\neq$ 0), $Na^+$, or $K^+$) before commencement of the pH decrease, thorough mixing being ensured during the entire reaction, and, if appropriate, the finished product, being dried and/or coated in a known manner.

2. Process for the preparation of calcium carbonate corresponding to Claim 1, essentially at temperatures of from 0–25°C by precipitation of an aqueous 3–25% strength by weight calcium hydroxide suspension using carbon dioxide, if appropriate mixed with air or nitrogen, characterized in that 3–25% by weight, based on the calcium hydroxide employed, of $PO_4^{3-}$ in the form of $H_aMe_{3-a}PO_4$ (a = 0–3; Me = H, $NH_4^+$ (a $\neq$ 0), $Na^+$ or $K^+$) is added before commencement of the pH decrease, thorough mixing is ensured during the entire reaction, and the finished product, if appropriate, is dried and/or coated in a known manner.

## Revendications

1. Charge de carbonate de calcium du type calcite, sous forme aciculaire, fibreuse et/ou rhabdoïde, ayant une aire spécifique BET de 15–200 $m^2/g$, un facteur de forme moyen supérieur à 5 et une teneur en phosphate de 2,5–25% en poids, calculée sous forme de $PO_4^{3-}$ et rapportée au carbonate de calcium, préparée par précipitation d'une suspension aqueuse à 3–25% en poids d'hydroxyde de calcium à l'aide d'anhydride carbonique, éventuellement en mélange avec de l'air ou de l'azote, à des températures de 0–25°C, 3–25% en poids, par rapport à l'hydroxyde de calcium utilisé, de $PO_4^{3-}$ sous forme de $H_aMe_{3-a}PO_4$ (a = 0–3; Me = H, $NH_4^+$ (a $\neq$ 0), $Na^+$, $K^+$) étant ajoutés avant le début de la chute du pH, la totalité de la réaction assurant un mélange intime parfait, le produit fini étant éventuellement séché et/ou revêtu d'une manière connue.

2. Procédé de préparation de carbonate de calcium selon la revendication 1, essentiellement à des températures de 0–25°C, par précipitation d'une suspension aqueuse à 3–25% en poids d'hydroxyde de calcium, à l'aide d'anhydride carbonique éventuellement en mélange avec de l'air ou de l'azote, caractérisé en ce que, avant le début de la diminution du pH, on ajoute 3–25% en poids, par rapport à l'hydroxyde de calcium utilisé, de $PO_4^{3-}$ sous forme de $H_aMe_{3-a}PO_4$ (a = 0–3; Me = H, $NH_4^+$ (a $\neq$ 0), $Na^+$, $K^+$), la totalité de la réaction assurant un mélange intime parfait, le produit fini étant éventuellement séché et/ou revêtu d'une manière connue.

VERGRÖSSERUNG 120 000 FACH

VERSUCH NR. 3

VERGRÖSSERUNG 120 000 FACH
PLATIN, IRIDIUM UND CARBON BEDAMPFT

VERSUCH NR. 6

VERGRÖSSERUNG 80 000 FACH

VERSUCH NR. 7

VERGRÖSSERUNG 150 000 FACH

VERSUCH NR. 8

VERSUCH NR. 17

VERGRÖSSERUNG 200 000 FACH

0,1μ

VERGRÖSSERUNG 100 000 FACH

VERSUCH NR. 18

VERGRÖSSERUNG 160 000 FACH

VERSUCH NR.18

VERGRÖSSERUNG 100 000 FACH

VERGLEICHSVERSUCH NR. E

VERGRÖSSERUNG 120 000 FACH

VERGLEICHSVERSUCH NR. 0

VERGRÖSSERUNG 160 000 FACH

VERGLEICHSVERSUCH NR. P

VERGRÖSSERUNG 250 000 FACH

VERGLEICHSVERSUCH NR. Q